# EUROPÄISCHE PATENTANMELDUNG

(11) **EP 1 477 653 A2**
(43) Veröffentlichungstag der Anmeldung: **17.11.2004**
(21) Anmeldenummer: 04101284.0
(22) Anmeldetag: 29.03.2004
(51) Int. Cl.: F02D 41/02, F02D 41/30, F02D 37/02

(54) **Aufheizen von Katalysatoren beim Betrieb von Verbrennungsmotoren mit Direkteinspritzung**

(30) Priorität: 09.05.2003 DE 10320890
(71) Anmelder: ROBERT BOSCH GMBH, 70442 Stuttgart (DE)
(72) Erfinder: Wagner, Jens, 70182 Stuttgart (DE); Kufferath, Andreas, 71706 Markgroeningen (DE)

(57) **Zusammenfassung**

Vorgestellt wird ein Verfahren zum Aufheizen wenigstens eines Katalysators (36,38)im Abgas eines mit Fremdzündung und direkter Einspritzung von Kraftstoff in Luftfüllungen wenigstens eines Brennraums (16) arbeitenden Verbrennungsmotors (12) durch abwechselndes Erzeugen von mageren Brennraumfüllungen und fetten Brennraumfüllungen in dem wenigstens einen Brennraum (16). Das Verfahren zeichnet sich dadurch aus, dass der Verbrennungsmotor (12) in einer ersten Betriebsart mit geschichteten Brennraumfüllungen betrieben wird und in einer zweiten Betriebsart mit homogenen Brennraumfüllungen betrieben wird, wobei magere Brennraumfüllungen in der ersten Betriebsart erzeugt werden und fette Brennraumfüllungen in der zweiten Betriebsart erzeugt werden.

## Beschreibung

### Stand der Technik

Die Erfindung betrifft ein Verfahren zum Aufheizen wenigstens eines Katalysators im Abgas eines mit Fremdzündung und direkter Einspritzung von Kraftstoff in Luftfüllungen wenigstens eines Brennraums arbeitenden Verbrennungsmotors durch abwechselndes Erzeugen von mageren Brennraumfüllungen und fetten Brennraumfüllungen in dem wenigstens einen Brennraum.

Ferner betrifft die Erfindung ein Steuergerät zur Steuerung des Verfahrens.

Ein solches Verfahren und ein solches Steuergerät sind aus der WO 98/46868 bekannt.

Die verwendeten Katalysatoren arbeiten in der Regel nur in einem eingeschränkten Temperaturintervall. Bei zu geringer Temperatur sind die gewünschten Konvertierungsraten für die Schadstoffkomponenten zu klein. Im Extremfall findet gar keine Konvertierung statt. Daher muss das Katalysatorsystem im Betrieb zur Erfüllung der Abgasgrenzwerte in einem bestimmten Temperaturfenster gehalten werden.

Die aus dem Motorbetrieb erzeugte Wärme kann in bestimmten Betriebszuständen, beispielsweise im Leerlauf, nicht ausreichend sein, um das für die optimale Konvertierung notwendige Temperaturfenster einzuhalten. Dies kann sowohl für einen als auch für mehrere in das Abgassystem integrierte Katalysatoren gelten. In solchen Fällen muss das Katalysatorsystem nachgeheizt werden. Bei einer Reihenschaltung von mehreren Katalysatoren, wie sie bei Verbrennungsmotoren mit Benzindirekteinspritzung üblich ist, können die verwendeten Katalysatoren Betriebstemperatur-Intervalle besitzen, die für Vorkatalysatoren und nachgeschaltete Speicherkatalysatoren unterschiedlich sind.

Während ein Dreiwege-Vorkatalysator Schadstoffkomponenten in einem weiten Temperaturbereich reduzieren und oxidieren kann, ist der Bereich der Betriebstemperaturen eines Speicherkatalysators in der Regel stärker eingeschränkt. Die Abgasanlage wird üblicherweise konstruktiv so ausgelegt, dass beide Katalysatoren in weiten Betriebsbereichen des Verbrennungsmotors in den entsprechenden zulässigen Temperaturbereichen arbeiten. Droht einer der Katalysatoren sein erlaubtes Temperaturintervall zu verlassen, werden Heizmaßnahmen eingeleitet. Dabei können Heizmaßnahmen für nur einen Katalysator notwendig sein.

So müssen insbesondere NOx-Speicherkatalysatoren periodisch entschwefelt werden. Speicherkatalysatoren speichern die speziell im magerem Motorbetrieb (mit Luftüberschuss) in erhöhtem Maße emittierten Stickoxide. Durch die große Affinität der aktiven Zentren des NOx-Speicherkatalysators gegenüber den bei der Verbrennung des Kraftstoffs entstehenden Schwefeloxiden (SO_x), werden die aktiven Zentren bevorzugt durch das SO_x belegt. Die dabei entstehenden Sulfate sind thermisch so stabil, dass sie im normalen Speicherbetrieb nicht wieder freigesetzt werden. Als Folge sinkt mit zunehmender Schwefelbeladung die Speicherfähigkeit des Katalysators für die Stickoxide.

Bei einer erhöhten Temperatur im Katalysator (T > 600 °C) und gleichzeitig reduzierenden Bedingungen (Sauerstoffmangel in Verbindung mit unverbranntem Kraftstoff im Abgas) sind die Sulfate thermodynamisch nicht mehr stabil und werden als Schwefelwasserstoff (H_2S) und Schwefeldioxid (S0_2) freigesetzt. Um die Speicherfähigkeit zu erhalten, bzw. wieder herzustellen, muss in bestimmten Abständen der Speicherkatalysator kurzzeitig fett bei erhöhten Temperaturen betrieben werden. Er ist dazu im Betrieb des Verbrennungsmotors auf bis zu 650 Grad Celsius aufzuheizen. Dabei soll eine Überhitzung des vorgeschalteten Vorkatalysators vermieden werden.

Für die Heizung von hinter einem Vorkatalysator angeordneten Speicherkatalysatoren im Abgas von Verbrennungsmotoren sind zwei verschiedene Ansätze per se bekannt. Nach einem ersten Ansatz wird heißes Motorabgas am Auslassventil erzeugt, beispielsweise durch einen Wechsel der Betriebsart, indem aus einem Schichtbetrieb in einen Homogenbetrieb gewechselt wird. Aus dem niedrigeren thermodynamischen Wirkungsgrad des Verbrennungsmotors im Homogenbetrieb im Vergleich zum Schichtbetrieb resultiert eine höhere Abgastemperatur. Additiv können im Homogenbetrieb späte Zündwinkel zur Erzeugung eines heißen Abgases eingesetzt werden. Die beschriebene motorische Heizmaßnahme verursacht, im Gegensatz zu direkten chemischen Heizmaßnahmen, einen erheblichen Kraftstoffmehrverbrauch. Nachteilig ist ferner, dass das heiße Motorabgas zunächst den Vorkatalysator aufheizt, was diesen überhitzen kann.

Nach einem zweiten, auch als chemisches Katalysator-Heizen bekannten Ansatz werden einem Katalysator sowohl Sauerstoff als auch Reduktionsmittel im Form von unverbrannten Kohlenwasserstoffen oder CO zugeführt. Drei alternative Möglichkeiten dieser Zufuhr sind bekannt.

Eine erste Möglichkeit setzt eine Y-Abgasanlage voraus. Darunter versteht man eine Abgasanlage, bei der Abgase verschiedener Zylinder oder Gruppen von Zylindern nach dem Verlassen des Zylinderkopfes vor einer Durchmischung mit den Abgasen der jeweils anderen Zylinder oder Gruppe von Zylindern zunächst in getrennten Abgasleitungen geführt werden. Die verschiedenen Zylinder oder Gruppen von Zylindern werden mit unterschiedlichem Kraftstoff/Luftverhältnis betrieben so dass eine Abgasleitung Abgase aus fetten Brennraumfüllungen führt, während eine andere Abgasleitung Abgase aus mageren Brennraumfüllungen führt.

Liegt der Speicherkatalysator hinter den getrennten Abgasleitungen in dem gemeinsamen Teil der Abgasanlage, in dem die Durchmischung stattfindet, kann er durch exotherme Reaktionen der fetten und mageren Abgase aufgeheizt werden. Da die Dreiwege-Vorkatalysatoren bei solchen Anordnungen üblicherweise in den getrennten Abgasleitungen angeordnet sind, werden sie nur von fettem oder nur von magerem Abgas durchströmt. Exotherme Reaktionen finden daher nur in dem Speicherkatalysator, nicht aber in den Dreiwege-Vorkatalysatoren statt. Da diese Variante teilweise getrennte Abgasleitungen voraussetzt, ist sie aufwendig und teuer.

Im Rahmen einer zweiten Alternative wird der Verbrennungsmotor insgesamt mit fetten Brennraumfüllungen betrieben. Dem Abgas, das in diesem Fall unverbrannte Kohlenwasserstoffe enthält, wird vor dem Speicherkatalysator Luftsauerstoff zugeführt. Daher werden exotherme Reaktionen ebenfalls auf den hinter einem Dreiwege-Vorkatalysator angeordneten Speicherkatalysator beschränkt. Diese Alternative kann zwar auch bei Abgasanlagen mit gemeinsamer Leitung der Abgase sämtlicher Zylinder oder Brennräume verwendet werden, sie benötigt aber eine zusätzliche Vorrichtung zur Zufuhr von Luftsauerstoff zum Speicherkatalysator.

Im Rahmen einer dritten Alternative erzeugt der Verbrennungsmotor abwechselnd fettes und mageres Abgas. Da ein Speicherkatalysator im Vergleich zu einem näher am Verbrennungsmotor angebrachten Dreiwege-Vorkatalysator meist eine höhere Sauerstoffspeicherkapazität aufweist, kann der größere Teil der durch abwechselnden fetten und mageren Betrieb des Verbrennungsmotors bereitgestellten chemischen Energie in den Speicherkatalysator eingetragen werden. Dadurch wird eine thermische Belastung des Vorkatalysators durch eine zur Entschwefelung des Speicherkatalysators notwendige Aufheizung zwar nicht vermieden, aber in Grenzen gehalten.

Das Verfahren nach der eingangs erwähnten WO 98/46868 arbeitet nach dieser dritten Alternative. Diese Schrift betrifft einen Verbrennungsmotor, der in einem lean burn mode betrieben werden kann. Im Zusammenhang mit dem Betrieb von Verbrennungsmotoren kann ein lean burn mode auf verschiedene Art und Weise realisiert werden. So können Verbrennungsmotoren mit homogener Verteilung eines mageren Kraftstoff/Luft-Gemisches in den Brennräumen betrieben werden (Homogenbetrieb).

Alternativ dazu können speziell dafür konstruierte Verbrennungsmotoren auch mit geschichteter Verteilung des Kraftstoff/Luft-Gemisches betrieben werden (Schichtbetrieb). Insbesondere Verbrennungsmotoren mit Fremdzündung und Benzindirekteinspritzung können bei geeigneter Steuerung sowohl in einem sogenannten Schichtbetrieb als auch in einem sogenannten Homogenbetrieb betrieben werden.

Im Schichtbetrieb wird der Motor mit einer stark geschichteten Zylinderladung und hohem Luftüberschuss betrieben, um einen möglichst niedrigen Kraftstoffverbrauch zu erreichen. Die geschichtete Ladung wird durch eine späte Kraftstoffeinspritzung erreicht, die im Idealfall zur Aufteilung des Brennraums in zwei Zonen führt: Die erste Zone enthält eine brennfähige Luft-Kraftstoff-Gemischwolke an der Zündkerze. Sie wird von der zweiten Zone umgeben, die aus einer isolierenden Schicht aus Luft und Restgas besteht. Das Potential zur Verbrauchsoptimierung ergibt sich aus der Möglichkeit, den Motor unter Vermeidung von Ladungswechselverlusten weitgehend ungedrosselt zu betreiben. Der Schichtbetrieb wird bei vergleichsweise niedriger Last bevorzugt.

Bei höherer Last, wenn die Leistungsoptimierung im Vordergrund steht, wird der Motor mit homogener Zylinderfüllung betrieben. Die homogene Zylinderfüllung ergibt sich aus einer frühen Kraftstoffeinspritzung während des Ansaugvorganges. Als Folge steht bis zur Verbrennung eine größere Zeit zur Gemischbildung zur Verfügung. Das Potential dieser Betriebsart zur Leistungsoptimierung ergibt sich zum Beispiel aus der Ausnutzung des gesamten Brennraumvolumens zur Füllung mit brennfähigem Gemisch.

Bei Benzindirekteinspritzmotoren besteht weiter die Möglichkeit, beim Betrieb mit Luftüberschuss, also vorzugsweise im Schichtbetrieb, gezielt Kraftstoff in den Zylinder nach der motorischen Verbrennung im Expansionstakt einzuspritzen. Hier reagiert aus dem nacheingespritzten Kraftstoff resultierendes Reduktionsmittel (z.B. HC, CO) mit dem Luftüberschuss der motorischen Verbrennung im Katalysator. Die bei der exothermen Reaktion freiwerdende Wärme heizt den Katalysator auf.

Dies ist aus der DE 100 43 366 A1 für die Aufheizung eines NOx-Speicherkatalysators ohne vorgeschalteten Dreiwege-Katalysator bekannt. Nach dieser Schrift erfolgt ein Umschalten auf Schichtbetrieb mit Nacheinspritzung um einen hohen Wärmestrom zu erzeugen. Dabei soll der Luftstrom soweit gedrosselt werden, dass der benötigte Wärmestrom bei einer geforderten Temperatur erreicht wird. Die Androsselung erfolgt durch ein gesteuertes Schließen einer Drosselklappe um einen vorbestimmten Winkel oder auf einen vorbestimmten Öffnungswinkel. Nach dieser Schrift soll die Gemischzusammensetzung für eine maximale Wärmefreisetzung nahe bei Lambda gleich 1 sein. Vorübergehende Gemischanreicherungen auf Lambdawerte kleiner als 1 (fettes Gemisch) durch dynamischen Fahrbetrieb mit wechselnden Drehmomentanforderungen sollen nach dieser Schrift vermieden werden, da sie die Abgasemissionen in unerwünschter Weise verschlechtern würden.

Mit anderen Worten: Nach dieser Schrift soll für eine Aufheizung eines einzelnen Katalysators ein Abgas bereitgestellt werden, das kontinuierlich sowohl Sauerstoff als auch unverbrannte Kohlenwasserstoffe aufweist.

Bei einer Reihenschaltung eines Dreiwege-Vorkatalysators und eines nachgeschalteten Speicherkatalysators läßt sich auf diese Weise nicht vermeiden, dass nicht nur der Speicherkatalysator, sondern auch der Vorkatalysator kontinuierlich chemisch geheizt werden. Diese Vorgehensweise führt daher nicht zu einer ausreichenden Entkopplung der Heizung eines Vorkatalysators und eines nachgeschalteten Speicherkatalysators, der zur Entschwefelung auf Temperaturen von ungefähr 650 Grad Celsius aufzuheizen ist.

Bei einem Verbrennungsmotor, der zumindest zeitweise mit geschichteter Brennraumfüllung aus Kraftstoff und Luft betrieben wird, bestimmt die während des Schichtbetriebs vor der Zündung eingespritzte Kraftstoffmenge das aus der Verbrennung resultierende Moment. Eine zu Heizzwecken erfolgende Modulation des Kraftstoff/Luft-Verhältnisses, wie sie in der WO 98/46868 vorgeschlagen wird, übt daher einen Einfluss auf das Drehmoment aus, der unerwünscht ist. Resultierende Fluktuationen des Drehmoments werden nach dieser Schrift durch Zündungseingriffe und/oder Füllungseingriffe kompensiert. Beschränkt man die Amplitude der Modulation auf Werte, bei denen beispielsweise bei geringer Momentenanforderung noch keine unzulässig starken Momentenfluktuationen auftreten, so ist der Energieeintrag in den Speicherkatalysator bei ungünstigem Verhältnis der Sauerstoffspeicherkapazitäten des Dreiwegekatalysators und des nachgeschalteten Speicherkatalysators nicht immer ausreichend.

Da der unerwünschte Momentenanstieg durch einen Teil des zusätzlichen Kraftstoffes verursacht wird, der den Speicherkatalysator aufheizen soll, steht nicht der gesamte zusätzlich eingespritzte Kraftstoff für die direkte, durch exotherm verlaufende chemische Reaktionen im Speicherkatalysator erfolgende Aufheizung zur Verfügung.

Mit anderen Worten: Die im Katalysator freigesetzte Wärme ist kleiner als die Wärme, die durch hundertprozentige Umsetzung des zusätzlich eingespritzten Kraftstoffes im Speicherkatalysator freiwerden würde. Der Wirkungsgrad der Modulation ist daher nicht optimal.

Im Schichtbetrieb eines Verbrennungsmotors kann der unerwünschte Momentenanstieg so stark sein, dass eine kompensierende Reduzierung der Brennraumfüllung mit Luft erfolgen muss. Dies ist aus mehreren Gründen unerwünscht. So wirken Drosseleingriffe wegen des Saugrohrvolumens erst verzögert. Ihre Wirkung verteilt sich darüber hinaus auf mehrere Ansaughübe des Verbrennungsmotors, so dass eine füllungsindividuelle Erzeugung von mageren und fetten Brennraumfüllungen mit abrupten Übergängen zwischen fetten und mageren Brennraumfüllungen bei Drosseleingriffen erschwert ist.

Darüber hinaus ist die Magerlauffähigkeit und damit der mögliche Luftüberschuss bei einem Betrieb des Verbrennungsmotors im Homogenbetrieb auf vergleichsweise kleine Werte beschränkt. Dadurch ist auch die Zufuhr von Heizleistung zum Katalysator beschränkt.

Vor diesem Hintergrund besteht die Aufgabe der Erfindung darin, ein Verfahren zur Aufheizung eines Katalysators anzugeben, das einen erhöhten Wärmeeintrag in den Katalysator bei verbessertem Wirkungsgrad der Heizmaßnahme besitzt.

Diese Aufgabe wird bei einem Verfahren der eingangs genannten Art dadurch gelöst, dass der Verbrennungsmotor in einer ersten Betriebsart mit geschichteten Brennraumfüllungen betrieben wird und in einer zweiten Betriebsart mit homogenen Brennraumfüllungen betrieben wird, wobei magere Brennraumfüllungen in der ersten Betriebsart erzeugt werden und fette Brennraumfüllungen in der zweiten Betriebsart erzeugt werden.

Darüber hinaus wird diese Aufgabe mit einem Steuergerät gelöst, das ein solches Verfahren steuert.

### Vorteile der Erfindung

Das erfindungsgemäße Verfahren und das erfindungsgemäße Steuergerät ermöglichen sowohl eine Aufheizung eines Dreiwegekatalysators als auch eine Aufheizung eines hinter einem Dreiwegekatalysator angeordneten Speicherkatalysators mit einem erhöhten Wärmeeintrag in den Speicherkatalysator bei verbessertem Wirkungsgrad der Heizmaßnahme. Die Aufheizung ist mit verringertem Einfluss auf die Momentenentwicklung des Verbrennungsmotors durchführbar und ermöglicht abrupte Übergänge zwischen fetten und mageren Brennraumfüllungen. Durch die Erfindung wird eine heizleistungsoptimierte Umschaltung zwischen dem Schichtbetrieb (mager) und dem Homogenbetrieb (fett) bereitgestellt. Ein die effektive Heizleistung verringernder Füllungsaufbau und Abbau wird durch die optimierte Steuerstrategie weitgehend vermieden, bzw. minimiert.

Weil die Sauerstoffspeicherkapazität des nachgeschalteten Speicherkatalysators im Allgemeinen wesentlich größer ist als die Sauerstoffspeicherkapazität des Dreiwegekatalysators, speichert der Speicherkatalysator im Schichtbetrieb mehr Sauerstoff, sofern der Schichtbetrieb lange genug beibehalten wird.

Erfindungsgemäß wird anschließend Reduktionsmittel (z.B. HC, CO) aus zumindest nicht vollständig verbranntem Kraftstoff in Verbindung mit Sauerstoffmangel im Abgas im Homogenbetrieb erzeugt. Während ein erster, kleinerer Teil des Reduktionsmittels mit dem Sauerstoffspeicherinhalt des Vorkatalysators reagiert, gelangt der größere Teil des zusätzlich durch die Nacheinspritzung dosierten Reduktionsmittels in den Speicherkatalysator und kann dort mit dem gespeicherten Sauerstoff exotherm reagieren.

Mit anderen Worten: Die Erfindung ermöglicht eine Aufteilung der freiwerdenden Reaktionswärmen entsprechend den unterschiedlichen Sauerstoffspeicherkapazitäten der beteiligten Katalysatoren.

Wegen der größeren Sauerstoffspeicherkapazität des nachgeschalteten Speicherkatalysators wird die größere Wärmemenge im Speicherkatalysator frei. Dadurch ergibt sich eine Entkopplung der Wärmemengen, die in verschiedenen, in einer Reihe angeordneten Katalysatoren freigesetzt werden.

Es ist bevorzugt, dass Fremdzündungen der fetten Brennraumfüllungen im Vergleich zu Fremdzündungen der mageren Brennraumfüllungen verspätet erfolgen.

Diese Ausgestaltung besitzt den Vorteil, dass der Wechsel zum Homogenbetrieb, bei dem größere Drehmomente erzeugbar sind, keine Auswirkungen auf das Drehmoment hat. Ein zu erwartender Drehmomentanstieg beim Wechsel von der ersten zur zweiten Betriebsart wird durch eine drehmomentsenkende Spätverstellung der Zündung abgeschwächt.

Es ist ferner bevorzugt, dass die Verspätung der Fremdzündung so bemessen ist, dass sich aus Verbrennungen der mageren Brennraumfüllungen und der fetten Brennraumfüllungen gleiche Momente ergeben.

Dadurch wird in vorteilhafter Weise eine vollständige Kompensation des Einflusses der Gemischänderung auf die Drehmomentabgabe erzielt.

Bevorzugt ist auch, dass magere Brennraumfüllungen in der zweiten Betriebsart so vorgesteuert werden, dass bei maximal magerer Brennraumfüllung ein gewünschtes, aus der Verbrennung zu erzielendes Moment bei optimaler Zündung erreicht wird.

Auf diese Weise kann ein maximaler Luftüberschuss im Brennraum bei einem bestimmten geforderten Drehmoment erzielt werden. Auf diese Weise kann eine maximal magere Brennraumfüllung und damit ein maximaler Sauerstoffeintrag pro Auslasshub des Verbrennungsmotors erreicht werden. Da der resultierende Luftüberschuss die maximal in einem nachfolgenden Katalysator freiwerdende Wärmemenge bestimmt, ergibt sich in vorteilhafter Weise ein maximales Heizleistungspotential. Darüber hinaus ergibt sich ein weiter Spät-Verstellbereich für die Zündung beim Übergang zu einer fetten Brennraumfüllung, was sowohl die Heizleistung als auch die Kompensationsmöglichkeiten von Drehmomentänderungen beim Wechsel zwischen den Betriebsarten vergrößert.

Da die Erfindung ein schlagartiges Umschalten der ersten Betriebsart zur zweiten Betriebsart von einer Verbrennung zur nächsten vorsieht, wobei gleichzeitig von magerer Brennraumfüllung auf fette Brennraumfüllung umgeschaltet wird, kann sofort sehr spät gezündet werden. Der maximale Wert der Spätverschiebung der Zündung liegt deutlich später als bei stöchiometrisch zusammengesetzter Brennraumfüllung in der zweiten Betriebsart. Daher kann der Verbrennungsmotor in der zweiten Betriebsart mit größerer Brennraumfüllung als gewöhnlich betrieben werden.

Daraus ergibt sich die Möglichkeit, einen Wechsel zwischen der ersten Betriebsart mit Sauerstoffüberschuss und der zweiten Betriebsart ohne Änderung der jeweiligen Brennraumfüllung erfolgen zu lassen.

Dadurch werden in vorteilhafter Weise Füllungseingriffe zum Konstanthalten des Drehmomentes vermieden. Anpassungen der Füllung bei jedem Wechsel der Betriebsart wären nachteilig, weil sie vergleichsweise träge erfolgen und mechanische Eingriffe, beispielsweise eine Verstellung einer Drosselklappenposition erfordern.

Weiter ist bevorzugt, dass die Brennraumfüllung bei der Durchführung der Verfahren in beiden Betriebsarten gleichmäßig reduziert wird.

Auf diese Weise kann auch bei Drehmomentanforderungen, bei denen Wechsel der Betriebsart zu Drehmomentunterschieden führen, die sich nicht durch eine Spätverstellung der Zündung im Homogenbetrieb kompensieren lassen, eine Betriebsartumschaltung ohne Drehmomentsprung realisiert werden. Der Drehmomentverlust durch die Reduzierung der Füllung kann im Schichtbetrieb durch eine erhöhte Kraftstoffmenge und im Homogenbetrieb durch eine Beschränkung der Spätverstellung der Zündung kompensiert werden.

Bevorzugt ist auch, dass der Wechsel zwischen fetten und mageren Brennraumfüllungen so gesteuert wird, dass ein Sauerstoffspeicher eines vor einem Speicherkatalysator angeordneten Vorkatalysators in einer Phase mit Sauerstoffmangel komplett entleert wird, der Sauerstoffspeicher des Speicherkatalysators aber nicht komplett entleert wird.

Auf diese Weise wird die Freisetzung der durch chemische Reaktionen freigesetzten Wärme auf den Vorkatalysator konzentriert. Dadurch kann der Vorkatalysator in gesteuerter Weise ohne Aufheizung des Speicherkatalysators aufgeheizt werden, was einen frühzeitigen Beginn der Schadstoffkonvertierung nach einem Kaltstart des Verbrennungsmotors ermöglicht.

Ferner ist bevorzugt, dass der Wechsel zwischen fetten und mageren Brennraumfüllungen so gesteuert wird, dass ein Sauerstoffspeicher eines hinter einem Vorkatalysator angeordneten Speicherkatalysators in einer Phase mit Sauerstoffmangel so weit entleert wird, dass hinter dem Speicherkatalysator Sauerstoffmangel auftritt.

Dadurch kann die Sauerstoffspeicherfähigkeit des Speicherkatalysators vollständig zur Aufheizung genutzt werden. Wegen der im Allgemeinen kleineren Sauerstoffspeicherfähigkeit des Vorkatalysators wird in diesem weniger Wärme frei. Damit kann der Speicherkatalysator, beispielsweise für eine Entschwefelung, effektiv aufgeheizt werden, ohne den Vorkatalysator zu überhitzen.

Weiter ist bevorzugt, dass der Wechsel zwischen fetten und mageren Brennraumfüllungen so gesteuert wird, dass ein Sauerstoffspeicher eines hinter einem Vorkatalysator angeordneten Speicherkatalysators in einer Phase mit Sauerstoffmangel so weit entleert wird, dass hinter dem Speicherkatalysator Sauerstoffmangel gerade noch nicht auftritt.

Auf diese Weise werden Abgasverschlechterungen, beispielsweise ein Auftreten von unverbrannten Kohlenwasserstoffen hinter der Katalysatoranordnung, weitgehend vermieden.

Bevorzugt ist ferner, dass das Steuergerät wenigstens eines der genannten Verfahren steuert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
Fig. 1 schematisch einen Verbrennungsmotor mit Direkteinspritzung und einer Abgasanlage mit einem Vorkatalysator und einem dahinter angeordneten Speicherkatalysator;
Fig. 2 qualitativ die Lage einer ersten Einspritzung und Zündung im Schichtbetrieb des Verbrennungsmotors; und
Fig. 3 qualitativ die Lage einer Einspritzung und einer Zündung im Homogenbetrieb des Verbrennungsmotors.

### Beschreibung der Ausführungsbeispiele

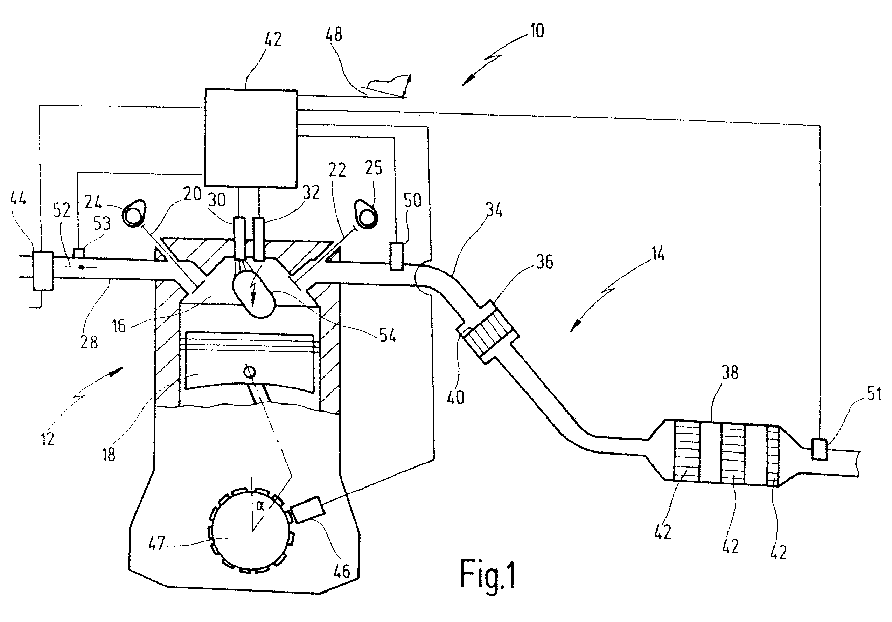

In der Figur 1 bezeichnet die Ziffer 10 die Gesamtansicht eines Verbrennungsmotors 12 mit einer Abgasanlage 14. Verbrennungsmotor 12 weist wenigstens einen Brennraum 16 auf, der von einem Kolben 18 beweglich abgedichtet wird. Der Wechsel der Füllung des Brennraums 16 wird über wenigstens ein Einlassventil 20 und wenigstens ein Auslassventil 22 gesteuert. Einlassventil 20 wird von einem Einlassventilsteller 24 betätigt und Auslassventil 22 wird von einem Auslassventilsteller 26 betätigt. Sowohl Einlassventilsteller 24 als auch Auslassventilsteller 26 können sowohl durch Nockenwellen als mechanische Steller oder durch elektrische, elektro-hydraulische oder elektropneumatische Steller realisiert sein.

Bei geöffnetem Einlassventil 20 saugt Kolben 18 Luft aus einem Saugrohr 28 an. Während des Ansaugvorganges und/oder während des nachfolgenden Verdichtungsvorganges wird Kraftstoff über ein Einspritzventil 30 direkt in den Brennraum 16 zugemessen. Das resultierende brennfähige Gemisch im Brennraum 16 wird mit einer Zündkerze 32 gezündet (Fremdzündung).

Bei geöffnetem Auslassventil 22 werden die verbrannten Restgase aus dem Brennraum 16 in die Abgasanlage 14 ausgestoßen. Die Abgasanlage 14 weist eine Abgasleitung 34 auf, in der ein Vorkatalysator 36 zwischen dem Verbrennungsmotor 12 und einem Speicherkatalysator 38 angeordnet ist. Vorkatalysator 36 und Speicherkatalysator 38 weisen Trägerstrukturen 40 bzw. 42 auf, die sich in ihrer katalytischen Beschichtung unterscheiden. Die Trägerstruktur 40 des Vorkatalysators 36 ist üblicherweise mit einer Beschichtung versehen, die den Vorkatalysator 36 bei einer Lambda = 1 Regelung als Drei-Wege-Katalysator arbeiten lässt.

Bei einer Lambda = 1 Regelung wird der Verbrennungsmotor 12 abwechselnd mit Sauerstoffüberschuss und Sauerstoffmangel betrieben, wobei die Periodendauer des Fett-Mager-Wechsels im Sekundenbereich liegt. In diesem Fall speichert der Vorkatalysator 36 in Sauerstoffüberschussphasen Sauerstoff und Stickoxide und lässt diese in Sauerstoffmangelphasen mit dann im Abgas enthaltenen Kohlenwasserstoffen und Kohlenmonoxid zu Kohlendioxid, Wasser und Stickstoff katalytisch reagieren. Wird der Verbrennungsmotor 12 dagegen längere Zeit mit magerem Gemisch, also mit Sauerstoffüberschuss betrieben, werden die dann verstärkt emittierten Stickoxide von der katalytischen Beschichtung der Trägerstrukturen 42 im Speicherkatalysator 38 aufgenommen und in Form von Stickstoffnitraten gespeichert.

Diese Stickstoffnitrate werden, wie auch parallel im Speicherkatalysator 38 gespeicherter Sauerstoff, durch einen kurzzeitigen Betrieb des Verbrennungsmotors 12 mit fettem Gemisch wieder abgebaut. Im Gegensatz zur Lambda = 1 Regelung sind die Mager-Phasen und Fettphasen, mit denen der Speicherkatalysator 38 betrieben wird, nicht näherungsweise symmetrisch. Der Speicherkatalysator 38 kann für Zeiträume, die in der Größenordnung von Minuten liegen, Sauerstoff und Stickoxide speichern und diese in einer Zeitspanne, die in der Größenordnung von Sekunden liegt, in konvertierter Form wieder abgeben. Dadurch kann der Motor in der Summe mager betrieben werden, ohne dass die im Magerbetrieb verstärkt emittierten Stickoxide in größeren Mengen in die Umwelt abgegeben werden.

Die Steuerung des Verbrennungsmotors 12 erfolgt durch ein Steuergerät 42, das zumindest Signale eines Luftmassenmessers 44, eines mit einem Geberrad 47 zusammenwirkenden Drehzahlsensors 46 und eines Fahrerwunschgebers 48 verarbeitet. Darüber hinaus können dem Steuergerät 42 Signale eines ersten Abgassensors 50, Signale eines zweiten Abgassensors 51 und die Signale weiterer, nicht dargestellter Sensoren, über Drücke und/oder Temperaturen im Bereich des Verbrennungsmotors 12 oder der Abgasanlage 14 zugeführt werden. Aus diesen und gegebenenfalls weiteren Eingangssignalen formt das Steuergerät 42 Steuersignale mit denen der Verbrennungsmotor 12 entsprechend dem Fahrerwunsch und/oder entsprechend vorprogrammierter Anforderungen betrieben werden kann.

So kann beispielsweise die Füllung eines Brennraums 16 im Homogenbetrieb des Verbrennungsmotors über die Stellung einer Drosselklappe 52, die von einem Drosselklappensteller 53 betätigt wird, eingestellt werden. Im Homogenbetrieb wird das vom Verbrennungsmotor 12 erzeugte Drehmoment im wesentlichen von der Masse der Brennraumfüllung und dem gewählten Zündzeitpunkt bestimmt. Im Schichtbetrieb arbeitet der Verbrennungsmotor 12 dagegen weitgehend ungedrosselt mit geöffneter Drosselklappe 52 und maximaler Brennraumfüllung des Brennraums 16 mit Luft. In diesem Fall wird das vom Verbrennungsmotor 12 erzeugte Drehmoment wesentlich von der eingespritzten Kraftstoffmasse und dem Zündzeitpunkt bestimmt.

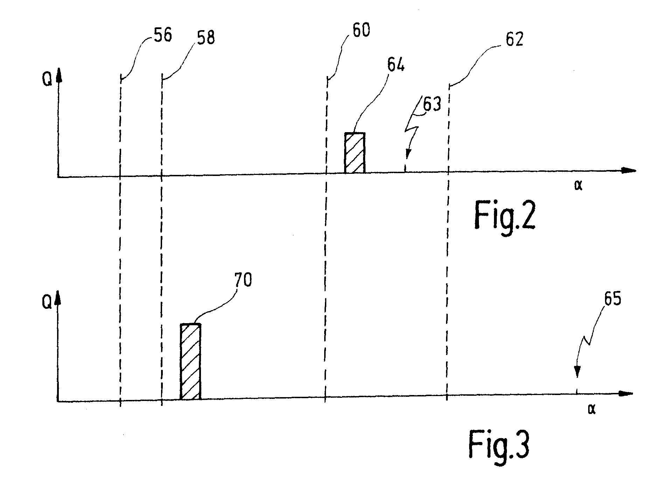

In der Fig. 1 ist qualitativ ein Schichtbetrieb des Verbrennungsmotors 12 dargestellt, in dem durch Einspritzung einer Kraftstoffmasse über das Einspritzventil 30 eine Zone 54 mit zündfähigem Gemisch erzeugt wird. Diese Zone 54 ist innerhalb des Brennraums 16 von Luft umgeben und wird durch eine Zündkerze 32 gezündet.
Die Lage der Einspritzungen und Zündungen, wie sie zur Aufheizung des Speicherkatalysators 38 vom Steuergerät 42 gesteuert wird, ist in den Fig. 2 und 3 für die verschiedenen Betriebsarten dargestellt. Dabei repräsentiert jeweils die Höhe der schraffierten Balken eine eingespritzte Kraftstoffmenge Q. Die Lage der Einspritzungen und Zündungen ist jeweils über dem Kurbelwellenwinkel alpha aufgetragen. Die mit der Ziffer 56 bezeichnete Linie repräsentiert jeweils den Winkel, bei dem das Einlassventil 20 öffnet. Die mit der Ziffer 58 bezeichnete Linie markiert jeweils den oberen Totpunkt für den Ladungswechsel. Entsprechend markiert die mit der Ziffer 60 bezeichnete Linie jeweils die Zeitpunkte, zu denen das Einlassventil 20 schließt und die mit der Ziffer 62 bezeichnete Linie markiert jeweils den oberen Totpunkt des Kolben 18, in dessen Nähe gezündet wird (Zündungs-OT).

Nach der Fig. 2 erfolgt im Schichtbetrieb des Verbrennungsmotors 12 die Einspritzung einer vergleichsweise kleinen ersten Einspritzmenge 64 nach einem Schließen des Einlassventils 20 im Verdichtungstakt. Das Einspritzen im Verdichtungstakt begünstigt die Ausbildung der Zone 54 mit zündfähigem Gemisch. Anschließend erfolgt eine normale, vor dem oberen Totpunkt 62 liegende Zündung 63. Die Lage der Zündung 63 ist üblicherweise so bestimmt, dass die Verbrennung der Brennraumfüllung ein maximales Drehmoment ergibt. Die Einspritzung 64 ist so bemessen, dass die Füllung des Brennraums 16 insgesamt mager ist.

Nach dem Muster der Fig. 3 wird die Kraftstoffmenge 70 vor dem Schließen des Einlassventils in den Brennraum 16 eingespritzt. Die eingespritzte Kraftstoffmenge verbleibt daher bis zur Zündung 65 vergleichsweise lange im Brennraum 16 und kann sich daher näherungsweise homogen im Brennraum 16 verteilen. Dabei ist die eingespritzte Kraftstoffmasse so bemessen, dass sich im Brennraum 16 eine fette Gemischzusammensetzung und damit Sauerstoffmangel ergibt. Wenn diese fette Brennraumfüllung zu einem Zeitpunkt gezündet würde, der ein optimales Drehmoment liefern würde, würde sich ein unerwünschter Drehmomentsprung ergeben. Um dies zu verhindern, erfolgt beim Muster der Fig. 3 eine verspätete Zündung 65, deren Lage so vorbestimmt ist, dass sich der Drehmomentverlust aus der Spätverschiebung der Zündung und der Drehmomentgewinn aus der Verbrennung der fetteren Brennraumfüllung kompensieren. Mit anderen Worten: Die Zündung 65 erfolgt zu einem Zeitpunkt, der ein gewünschtes Drehmoment ergibt. Das gewünschte Drehmoment soll dabei möglichst genau dem Drehmoment entsprechen, das bei einer Verbrennung entsprechend Fig. 2 erzeugt wird.

Zur Aufheizung des Speicherkatalysators 38 steuert das Steuergerät 42 Einspritzungen und Zündungen im Wechsel entsprechend den Mustern der Fig. 2 und 3. Dabei wird das Muster der Fig. 2 für eine Aufheizung des Speicherkatalysators 38 solange beibehalten, bis die Sauerstoffspeicher der Katalysatoren 36 und 38 vollständig gefüllt sind. Anschließend erfolgen Einspritzungen und Zündungen entsprechend dem Muster der Fig. 3. Dieses Muster wird so lange beibehalten, bis der Sauerstoffspeicher des Speicherkatalysators 38 nahezu vollständig oder vollständig geleert ist.

Dies kann sowohl in gesteuerter als auch in geregelter Weise erfolgen.

Für eine gesteuerte Durchführung wird das Muster nach der Fig. 3 für eine vorbestimmte Anzahl von Brennraumfüllungen beibehalten, die sich an einem Erwartungswert für die Sauerstoffspeicherkapazität des Speicherkatalysators bemisst. Dieser Erwartungswert kann fest vorgegeben sein oder aus Betriebsgrößen des Verbrennungsmotors 12 und der Abgasanlage 14 im Steuergerät 42 modelliert werden. Bei einer geregelten Durchführung wird das Muster nach der Fig. 3 so lange beibehalten, bis das Signal eines hinter dem Speicherkatalysators 38 angeordneten Sauerstoffsensors 51 Sauerstoffmangel im Abgas anzeigt. Selbstverständlich kann das Signal eines solchen Abgassensors 51 auch zur Korrektur eines modellhaft gebildeten Erwartungswertes für die Sauerstoffspeicherkapazität des Speicherkatalysators 38 verwendet werden. Dies hat den Vorteil, dass nicht bei jeder Aufheizung des Speicherkatalysators 38 ein Durchbruch von Kohlenwasserstoffen und CO durch den Speicherkatalysator 38 abgewartet werden muss, so dass in der Summe über mehrere Aufheizvorgänge unnötige HC- und CO-Emissionen verringert werden.

Bei dieser Vorgehensweise, das heißt bei einer Steuerung der Einspritzungen und Zündungen entsprechend den Mustern der Figuren 2 und 3, wird der Vorkatalysator 36 bei einem Wechsel zwischen den Mustern der Fig. 2 und 3 jeweils vollständig mit einer vergleichsweise kleinen Sauerstoffmenge gefüllt und von Sauerstoff entleert, während der größere Teil des in das Abgassystem 14 eingebrachten Sauerstoffs und Reduktionsmittels im Speicherkatalysator 38 exotherm reagiert.

Eine Umschaltung zwischen den Mustern der Figuren 2 und 3 erfolgt bevorzugt schlagartig, das heißt, von einer Brennraumfüllung zur nächsten Brennraumfüllung.

Erfindungsgemäß wird damit nicht wie bei dem Verfahren nach der WO 98/46868 kontinuierlich im Homogenbetrieb, mit periodisch wechselndem Lambda (Wechsel zwischen mager und fett) gearbeitet, sondern es wird zusätzlich die Betriebsart zwischen Schichtbetrieb (mager) und Homogenbetrieb (fett) mit einer speziellen Steuerstrategie gewechselt, um den Sauerstoffspeicher optimal zu nutzen.

Die homogene Betriebsart kann auch im sogenannten homogensplit-Betrieb gefahren werden, bei dem eine Einspritzung in den Ansaugtakt und eine vor der Zündung erfolgende Einspritzung in den Kompressionstakt gesteuert wird. Durch den Schichtbetrieb in der Magerphase ist auch das Problem der begrenzten Magerlauffähigkeit im Homogenbetrieb, die die Zufuhr an chemischer Energie limitiert, entschärft.

Stark vereinfacht betrachtet, wird bei einem konventionellen Wechsel zwischen Schicht- und Homogenbetrieb im Schichtbetrieb zuerst angedrosselt um die Füllung abzubauen, bevor man in den Homogenbetrieb schaltet. Umgekehrt wird beim Wechsel vom Homogenbetrieb in den Schichtbetrieb erst im Homogenbetrieb Füllung aufgebaut, indem der Zündwinkel gegen spät gezogen wird. Dieser Füllungsabbau und Füllungsaufbau kostet Zeit, was an effektiver Heizleistung verlorengeht. Mit der in dieser Anmeldung beschriebenen Steuerstrategie wird dieser Nachteil vermieden. Zusätzlich kann durch die Steuerstrategie sowohl der Vorkatalysator einzeln, als auch das Gesamtsystem aus Vor- und Speicherkatalysator oder eine andere Reihenschaltung von Katalysatoren aufgeheizt werden. Die Heizrate wird durch die Steuerstrategie als auch durch die Sauerstoffspeicher der Katalysatoren bestimmt.

Durch die Steuerstrategie wird im Idealfall ermöglicht, dass zwischen dem mageren Schichtbetrieb und dem fetten Homogenbetrieb kein Füllungsunterschied vorliegt, womit kein Füllungsab- bzw. Aufbau erforderlich wird. Eine Umschaltung zwischen magerem Schichtbetrieb und fettem Homogenbetrieb kann somit ohne Verzögerung erfolgen. Damit liegt auch sofort an den Auslassventilen des Verbrennungsmotors ein mageres oder fettes Lambda vor, was in Kombination mit dem Sauerstoffspeicher der Katalysatoren die Aufheizung ermöglicht.

Lässt der Betriebszustand keine absolute Füllungsgleichheit im homogenen und geschichteten Betrieb zu, so kann zumindest die Umschaltzeit durch eine möglichst große Gleichheit der Füllungen minimiert werden.

Die Periodendauer der Fett- und Magerzyklen richtet sich nach den Verhältnissen des Abgasvolumenstromes, der Lambdas im Fetten und Mageren, der Sauerstoffspeicherfähigkeit der Katalysatoren und der angeforderten Heizleistung.

Möchte man nur den Vorkatalysator aufheizen, so wird die Menge des Fett- und Magergases genau auf den Sauerstoffspeicher des Vorkatalysators angepasst. Jeweils bei Durchbruch von Fett- und Magergas nach Vorkatalysator wird die Betriebsart gewechselt. Dies kann sowohl rein modellgesteuert, als auch geregelt erfolgen. Bei einer Regelung kann man sich auf das Signal des ersten Abgassensors 50 hinter dem Vorkatalysator 36 stützen.

Alternativ zum Lambdasplit bei Systemen mit zwei Vorkatalysatoren in Y-Anordnung, bei denen zur Aufheizung des Speicherkatalysators eine Bank fett und eine Bank mager gefahren wird, kann die oben beschriebene Art der Aufheizung auch bei diesen Systemen eingesetzt werden.

## Patentansprüche

1. Verfahren zum Aufheizen wenigstens eines Katalysators (36,38)im Abgas eines mit Fremdzündung und direkter Einspritzung von Kraftstoff in Luftfüllungen wenigstens eines Brennraums (16) arbeitenden Verbrennungsmotors (12) durch abwechselndes Erzeugen von mageren Brennraumfüllungen und fetten Brennraumfüllungen in dem wenigstens einen Brennraum (16),
**dadurch gekennzeichnet, dass**
der Verbrennungsmotor (12) in einer ersten Betriebsart mit geschichteten Brennraumfüllungen betrieben wird und in einer zweiten Betriebsart mit homogenen Brennraumfüllungen betrieben wird, wobei magere Brennraumfüllungen in der ersten Betriebsart erzeugt werden und fette Brennraumfüllungen in der zweiten Betriebsart erzeugt werden.

2. Verfahren nach Anspruch 1, **dadurch gekennzeichnet, dass** Fremdzündungen (65) der fetten Brennraumfüllungen im Vergleich zu Fremdzündungen (63) der mageren Brennraumfüllungen verspätet erfolgen.

3. Verfahren nach Anspruch 2, **dadurch gekennzeichnet, dass** die Verspätung der Fremdzündung (65) so bemessen ist, dass sich aus Verbrennungen der mageren Brennraumfüllungen und der fetten Brennraumfüllungen gleiche Momente ergeben.

4. Verfahren nach einem der Ansprüche 1 bis 3, **dadurch gekennzeichnet, dass** magere Brennraumfüllungen in der zweiten Betriebsart so vorgesteuert werden, dass bei maximal magerer Brennraumfüllung ein gewünschtes, aus der Verbrennung zu erzielendes Moment bei optimaler Zündung (63) erreicht wird.

5. Verfahren nach einem der vorhergehenden Ansprüche, **dadurch gekennzeichnet, dass** ein Wechsel zwischen der ersten Betriebsart mit Sauerstoffüberschuss und der zweiten Betriebsart ohne Änderung der jeweiligen Brennraumfüllung erfolgt.

6. Verfahren nach einem der Ansprüche 1 bis 4, **dadurch gekennzeichnet, dass** die Brennraumfüllung bei der Durchführung der Verfahren in beiden Betriebsarten gleichmäßig reduziert wird.

7. Verfahren nach einem der vorhergehenden Ansprüche, **dadurch gekennzeichnet, dass** der Wechsel zwischen fetten und mageren Brennraumfüllungen so gesteuert wird, dass ein Sauerstoffspeicher eines vor einem Speicherkatalysator (38) angeordneten Vorkatalysators (36) in einer Phase mit Sauerstoffmangel komplett entleert wird, der Sauerstoffspeicher des Speicherkatalysators (38) aber nicht komplett entleert wird.

8. Verfahren nach einem der vorhergehenden Ansprüche, **dadurch gekennzeichnet, dass** der Wechsel zwischen fetten und mageren Brennraumfüllungen so gesteuert wird, dass ein Sauerstoffspeicher eines hinter einem Vorkatalysator (36) angeordneten Speicherkatalysators (38) in einer Phase mit Sauerstoffmangel so weit entleert wird, dass hinter dem Speicherkatalysator (38) Sauerstoffmangel auftritt.

9. Verfahren nach einem der Ansprüche 1 bis 6, **dadurch gekennzeichnet, dass** der Wechsel zwischen fetten und mageren Brennraumfüllungen so gesteuert wird, dass ein Sauerstoffspeicher eines hinter einem Vorkatalysator (36) angeordneten Speicherkatalysators (38) in einer Phase mit Sauerstoffmangel so weit entleert wird, dass hinter dem Speicherkatalysator (38) Sauerstoffmangel gerade noch nicht auftritt.

10. Steuergerät 42 zur Steuerung des Aufheizens wenigstens eines Katalysators (36,38) im Abgas eines mit Fremdzündung und direkter Einspritzung von Kraftstoff in Luftfüllungen wenigstens eines Brennraums (16) arbeitenden Verbrennungsmotors (12) durch abwechselndes Erzeugen von mageren Brennraumfüllungen und fetten Brennraumfüllungen in dem wenigstens einen Brennraum (16), **dadurch gekennzeichnet, dass** das Steuergerät (42) wenigstens eines der Verfahren nach den Ansprüchen 1 bis 9 steuert.
